# EUROPEAN PATENT SPECIFICATION

(11) **EP 2 324 696 B1**
(45) Date of publication and mention of the grant of the patent: **27.05.2020**
(21) Application number: 10386017.7
(22) Date of filing: 26.10.2010
(51) Int. Cl.: A01G 9/029

(54) **Plastic double tray system for mechanical seed sowing or seedling transplantation**
Doppelplattensystem aus Kunststoff für die mechanische Aussaat oder Verpflanzung von Keimlingen
Système de double plateau en plastique pour le semis mécanique de graines ou la transplantation mécanique de plantules

(30) Priority: 26.10.2009 GR 20090100591
(43) Date of publication of application: 25.05.2011
(73) Proprietor: D.T.System International LTD, 2040 Nicosia (CY)
(72) Inventor: Tsonakis, Iakovos, 15125 Marousi Attikis (GR); Korkodilos, Aggelos, 14564 Kifissia Attikis (GR)
(74) Representative: EP&C

(56) References cited:
- WO-A1-2005/094559
- WO-A1-2009/116959
- FR-A1- 2 917 572
- US-A- 3 142 133
- US-A- 3 386 608
- US-A- 4 658 542
- US-A1- 2003 066 465

## Description

This invention refers to a plastic double tray system that works as one rigid object, which consists of one top plastic tray for sowing or transplanting and one bottom plastic tray for support.

Mechanical seed sowing and seedling transplantation takes place on expanded polystyrene trays which are first filled with the suitable substrate and then driven through the proper machine that sows the seeds or places the plugs or seedlings in tray's cells. Then trays are placed in such environmental conditions to promote germination, plant establishment and growth. During this stage roots grow in the substrate and reach cell walls which they penetrate and continue growing through. Later on, when plants are fully grown, they are pulled out of the tray. This is particularly difficult as roots have anchored in the tray's body. Additionally plants come out with injured rooting system, which has a negative impact on plant quality, plant growth, and increases the potential of plant infection during transplantation and plant establishment. Until now, the only solution to the problem was the use of insert trays inside the expanded polystyrene trays, which helps only with root anchoring not with plant extraction, troubles the sowing or the transplantation line and significantly increases tray cost. Moreover, expanded polystyrene trays have very big volume, therefore high transport and storage cost. Last, expanded polystyrene is not recyclable trough normal recycling procedures.

WO 2005/094559 discloses a plant cultivation tray which has a quadrangular piece including a peripheral rim and a tray body with a plurality of identical open-topped, downward-projecting cultivation containers. A reinforcing support is provided for supporting the tray body. The reinforcing support is formed by a thermoformed quadrangular sheet comprising a plurality of identical box-shaped containers. These containers have a configuration that is complementary to a lower end of the cultivation containers of the plant cultivation tray to obtain a tight housing. A drawback to the plant cultivation tray is however that it does not comply to strength requirements.

This invention is a plastic double tray system according to independent claim 1. This double tray system is with drain holes, made out of PP, PS or PET; where in the top tray sowing or transplantation takes place and the bottom tray, which is supporting the system, has the shape of the reverse negative of the top tray with an additional surrounding wall. The combination of these two trays makes an inflexible system. The outer shape of the system is compatible with all the sowing or transplanting automatic lines which are using expanded polystyrene trays. The surrounding wall keeps excess substrate away from the system during the filling stage and also provides a smooth surface for printing crop information that is essential for production management. Double tray system is impenetrable from roots, so no anchoring on cell walls occurs and plant extraction is easy with no root damage. Also plant extraction can be done trough the drain holes with an extractor or by hand. Both parts of the plastic double tray system can be placed one inside the other respectively, thus keeping very low transport and storage volume (and cost). Plastic double tray system is made of PP (polypropylene) PS (polystyrene) or PET (polyethylene terephthalate) which are all recyclable.

Advantages of this invention are: easy plant extraction with no injuries, very low transport and storage volume, made out of completely recyclable material. Plastic double tray system is also rigid, very durable and does not require any changes on the existing production systems.

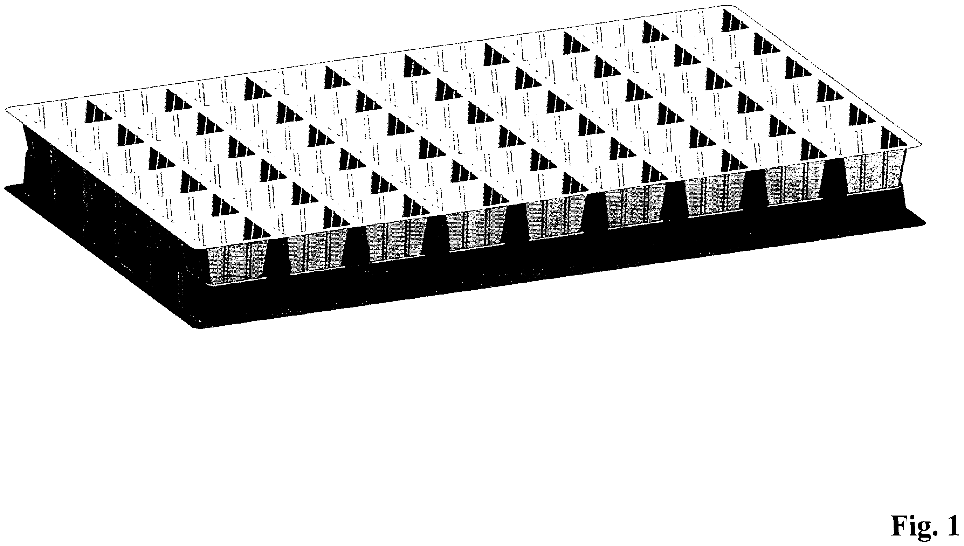

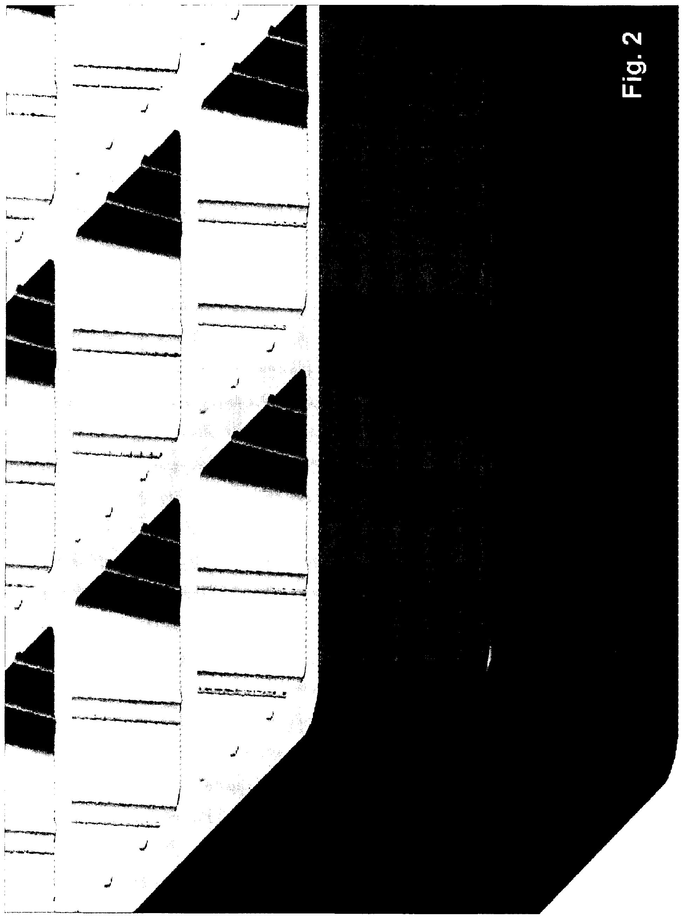

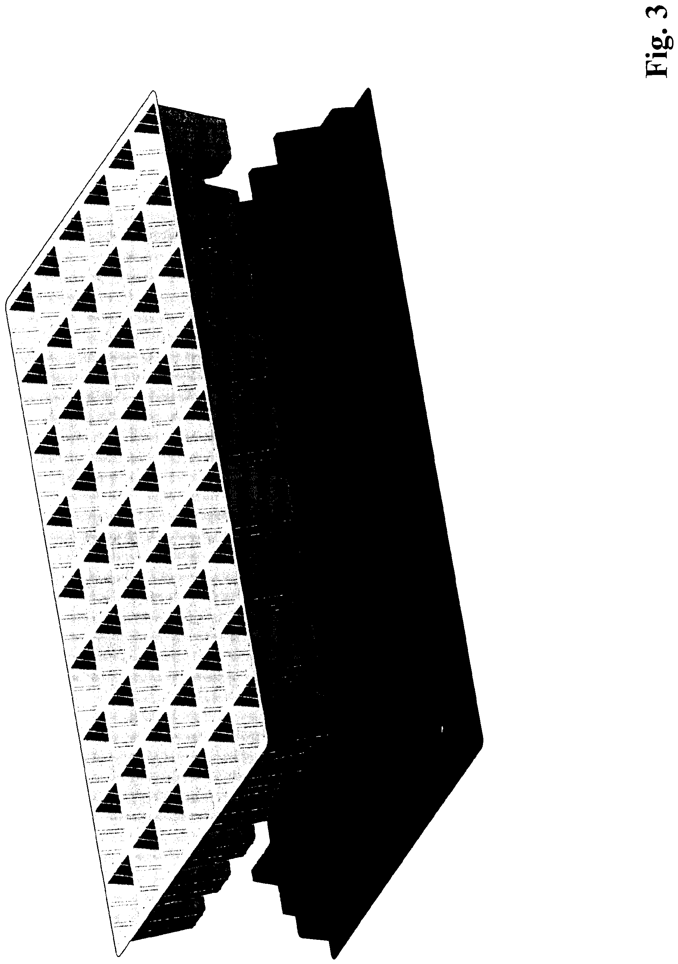

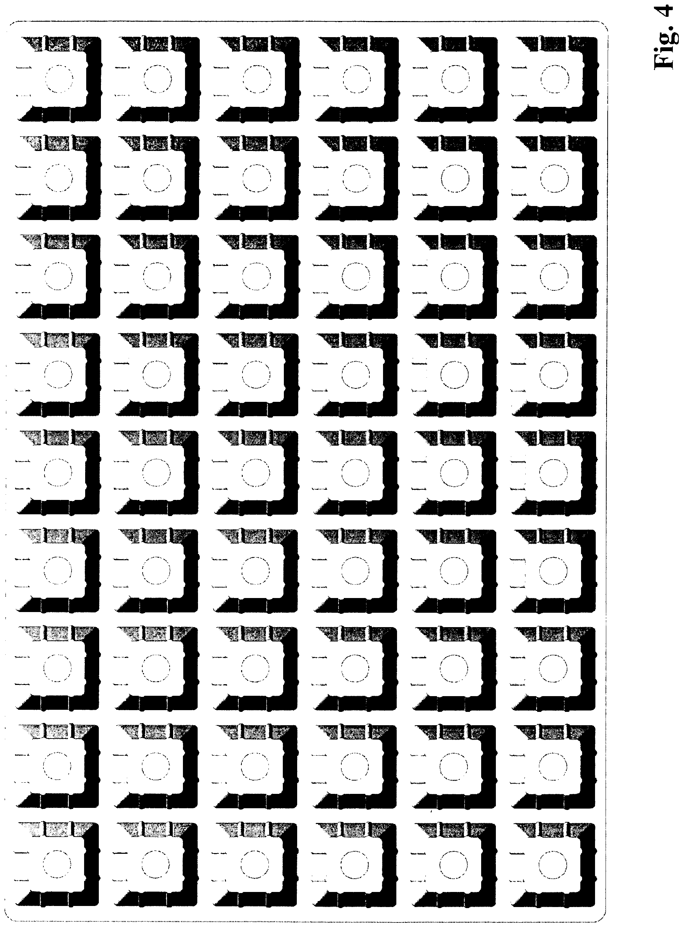

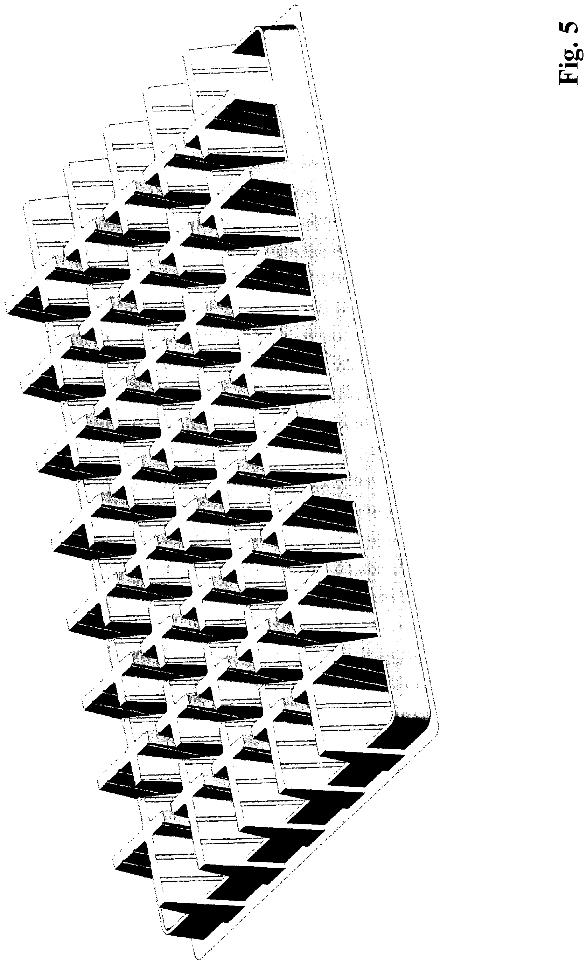

On Fig.1 we can find a prospective view of the plastic double tray system. On Fig.2 we have the enlargement of one of plastic double tray system's corners where the surrounding wall is shown. On Fig.3 we have the prospective view of each tray just before they are combined to the plastic double tray system. On Fig.4 there is an overview of plastic double tray system. On Fig.5 we have a prospective view of the bottom tray which supports the plastic double tray system.

As an example of application of the plastic double tray system, we use one with outer dimensions 60cm x 40cm x 6cm that has 54 square cells. The shape of the plastic double tray system with the above specifications is shown on the presented figures.

## Claims

1. Plastic double tray system made of PP, PS or PET raw material trough a thermoforming process consisting of
one flexible top tray for sowing or transplantation, which top tray comprises a matrix of N x M cells for receiving a substrate, N being the number of cells along the length of the top tray and M being the number of cells along the width of the top tray, in which each cell includes a cell space which is defined by a circumferential cell wall and a cell bottom;
and one flexible bottom tray for support, which bottom tray comprises a base plate which has a bottom side and a top side, which base plate comprises a matrix of (N - 1) x (M - 1) supporting elements for supporting the top tray, said supporting elements project at the top side away from the base plate, in which each supporting element has a shape of a truncated rectangular pyramid having pyramid corner edges which are recessed along their entire height for receiving a corner edge of a cell in which in a combination of the top and bottom tray the result is one unified and rigid object provided in that each supporting element fills up an intermediate space in between two neighbouring cells of the top tray to prevent a relative movement of neighbouring cells away from each other.

2. Plastic double tray system according to claim 1, wherein both trays of the system have drain holes.

3. Plastic double tray system, according to claim 1, **characterized by** the fact that the bottom tray has a surrounding wall, which size can vary from zero height (no wall) to as tall as the total tray height.

## Patentansprüche

1. Kunststoff-Doppelschalen-System, das aus PP, PS oder PET Rohmaterial in einem Thermoformprozess hergestellt ist, bestehend aus
einer flexiblen oberen Schale für die Aussaat oder Transplantation, wobei die obere Schale eine Matrix aus N x M Zellen für die Aufnahme eines Substrats umfasst, wobei N die Anzahl der Zellen entlang der Länge der oberen Schale und M die Anzahl der Zellen entlang der Breite der oberen Schale ist, wobei jede Zelle einen Zellenraum definiert, der durch eine umlaufende Zellenwand und einen Zellenboden definiert ist;
und einer flexiblen unteren Schale zur Abstützung, wobei die untere Schale eine Grundplatte umfasst, die eine Unterseite und eine Oberseite aufweist, wobei die Grundplatte eine Matrix aus (N -1) x (M -1) Tragelementen für ein Abstützen der oberen Schale umfasst, wobei die Tragelemente an der Oberseite von der Grundplatte wegragen, wobei jedes Tragelement die Form einer stumpfen rechteckigen Pyramide hat, die Pyramiden-Eckkanten aufweist, welche über ihre gesamte Höhe vertieft sind, um eine Eckkante einer Zelle aufzunehmen,
wobei in einer Kombination aus oberer und unterer Schale das Ergebnis ein einheitliches und starres Objekt erhalten ist, wobei jedes Tragelement einen Zwischenraum zwischen zwei benachbarten Zellen der oberen Schale ausfüllt, um eine Relativbewegung benachbarter Zellen voneinander weg zu verhindern.

2. Kunststoff-Doppelschalen-System nach Anspruch 1, wobei beide Schalen des Systems Ablauflöcher aufweisen.

3. Kunststoff-Doppelschalen-System nach Anspruch 1, **gekennzeichnet durch** die Tatsache, dass die untere Schale eine umgebende Wand aufweist, deren Größe von Nullhöhe (keine Wand) bis zur Höhe der gesamten Schalenhöhe variieren kann.

## Revendications

1. Système de double plateau fait à partir de matière première PP, PS ou PET par un procédé de thermoformage, se composant d'un plateau supérieur flexible pour ensemencement ou transplantation, lequel plateau supérieur comprend une matrice de NxM cellules pour recevoir un substrat, N étant le nombre de cellules selon la longueur du plateau supérieur et M étant le nombre de cellules selon la largeur du plateau supérieur, dans lequel chaque cellule inclut un espace de cellule qui est défini par une paroi de cellule circonférentielle et un fond de cellule ; et d'un plateau de fond flexible pour support, lequel plateau de fond comprend une plaque de base qui a un côté de fond et un côté de dessus, laquelle plaque de base comprend une matrice de (N-1)×(M-1) éléments de support pour supporter le plateau supérieur, lesdits éléments de support faisant saillie au niveau du côté de dessus de manière à s'éloigner de la plaque de base, dans lequel chaque élément de support a une forme de pyramide rectangulaire tronquée ayant des bords de coin de pyramide qui sont en retrait sur leur hauteur complète pour recevoir un bord de coin d'une cellule dans lequel une combinaison du plateau supérieur et du plateau inférieur résulte en un objet rigide unifié conçu de manière que chaque élément de support remplit un espace intermédiaire entre deux cellule voisines du plateau supérieur pour prévenir un mouvement relatif d'éloignement de cellules voisines l'une par rapport à l'autre.

2. Le système de double plateau selon la revendication 1, dans lequel les deux plateaux du système ont des orifices de drainage.

3. Le système de double plateau selon la revendication 1, **caractérisé par le fait que** le plateau inférieur a une paroi qui l'entoure, dont la taille peut varier d'une hauteur nulle (pas de paroi) jusqu'à une hauteur totale de la hauteur du plateau.
